# EUROPÄISCHE PATENTSCHRIFT

(11) **EP 2 528 761 B1**
(45) Veröffentlichungstag und Bekanntmachung des Hinweises auf die Patenterteilung: **15.03.2017**
(21) Anmeldenummer: 11706147.3
(22) Anmeldetag: 25.01.2011
(51) Int. Cl.: B60K 1/04, B60L 11/18, B60L 11/08

(54) **ELEKTRO-KLEINFAHRZEUG**
Small electric vehicle
Petit véhicule électrique

(30) Priorität: 28.03.2010 EP 10003321; 26.01.2010 DE 202010001374 U
(43) Veröffentlichungstag der Anmeldung: 05.12.2012
(73) Patentinhaber: Schlagheck Design GmbH, 82041 Oberhaching (DE)
(72) Erfinder: SCHLAGHECK, Julian, 81477 München (DE)
(74) Vertreter: Gellner, Bernd
(86) Internationale Anmeldenummer: PCT/EP2011/000298
(87) Internationale Veröffentlichungsnummer: WO 2011/091979

(56) Entgegenhaltungen:
- WO-A1-2009/126321
- DE-A1- 3 347 054
- DE-B3-102005 021 872
- DE-U1-202009 000 090
- GB-B- 2 385 838
- US-A- 3 888 324
- US-A1- 2004 216 929
- US-A1- 2009 308 676

## Beschreibung

Die Erfindung betrifft ein Kleinfahrzeug für den Personentransport mit einem elektrischen Antrieb, der zumindest einen Elektromotor umfasst, mit einer Batterie, mit einem Grundkörper, der sich längs von einem vorderen und zu einem hinteren Ende erstreckt, wobei an dem Grundkörper ein oder zwei vordere Räder und zumindest zwei hintere Räder befestigt sind, und mit einer Lenkvorrichtung zum Lenken von einem oder mehreren der Räder, wobei zumindest die hintere Hälfte des Grundkörpers nach oben durch eine im Wesentlichen ebene Ladefläche begrenzt wird und dass der Elektromotor und die Batterie unterhalb der Ladefläche oder in einem oder mehreren der Räder angeordnet sind.

Aus dem Stand der Technik sind verschiedenartige Kleinfahrzeuge bekannt, die die Mobilität von Senioren und gehbehinderten Personen vereinfachen sollen. Diese sogenannten Seniorenmobile oder Senioren-Scooter sind als elektrisch angetriebene Kleinfahrzeuge mit einem Lenker und einem zentral über der Fahrzeuglängsachse angeordneten Sitz ausgeführt.

Weiterhin sind elektrische Kleinfahrzeuge für spezielle Einsatzzwecke bekannt. Hierzu gehören beispielsweise elektrische Golfwagen, die teilweise auch als Golf-Elektro-Caddies bezeichnet werden. Für den Freizeitbereich werden auch zweirädrige selbstbalancierende elektrische Fahrzeuge angeboten. All diesen Kleinfahrzeugen ist gemeinsam, dass sie auf einen bestimmten Anwendungsbereich zugeschnitten sind.

Das Dokument US3888324 offenbart einen Fahrzeug gemäss dem Oberbegriff des Anspruchs 1.

Aufgabe vorliegender Erfindung ist es, ein Kleinfahrzeug zu entwickeln, welches für eine Vielzahl von Einsatzzwecken benutzt werden kann und welches im Alltag vielfältig einsetzbar ist.

Diese Aufgabe wird gelöst durch ein Kleinfahrzeug gemäss Anspruch 1.

In einer bevorzugten Ausführung ist der Grundkörper in dem Bereich zwischen dem oder den vorderen Rädern und dem hinteren Ende des Grundkörpers nach oben durch eine im Wesentlichen ebene Ladefläche begrenzt und der Elektromotor und die Batterie sind unterhalb der ebenen Ladefläche oder in einem oder mehreren der Räder angeordnet.

Unter einem Kleinfahrzeug wird im Rahmen dieser Beschreibung ein Landfahrzeug verstanden, welches eine Geschwindigkeit von bis zu 60 km/h erreicht. In alternativen Ausführungsformen weist das erfindungsgemäße Kleinfahrzeug eine Maximalgeschwindigkeit von 50 km/h, 40 km/h, 30 km/h, 25 km/h, 20 km/h oder 15 km/h auf.

Das Kleinfahrzeug ist bevorzugt für den Einsatz in einem Aktionsradius von bis zu 10 km vorgesehen. Unter Aktionsradius soll hierbei die Entfernung verstanden werden, innerhalb derer sich die mit dem Kleinfahrzeug zu erreichenden Ziele befinden. Üblicherweise sollte das Kleinfahrzeug diese Strecke ohne Nachladen der Batterie mehrfach, beispielsweise 5 bis 20 Mal oder 8 bis 15 Mal, zurücklegen können. Je nach Ausführung des Kleinfahrzeugs liegt der bevorzugte Einsatzbereich auch innerhalb eines Aktionsradius von bis zu 5 km oder bis zu 2 km. Von Vorteil wird das Kleinfahrzeug im innerstädtischen Bereich oder in stadtnahen Zonen Verwendung finden. Sofern die anzufahrenden Ziele nicht zu weit auseinander liegen, kann das Kleinfahrzeug auch vorteilhaft im ländlichen Bereich, beispielsweise in Dörfern oder zwischen benachbarten Dörfern, eingesetzt werden.

Die Länge des erfindungsgemäßen Kleinfahrzeugs beträgt vorzugsweise weniger als 200 cm, bevorzugt maximal 160 cm, besonders bevorzugt maximal 140 cm. Die maximale Breite des Kleinfahrzeugs beträgt bevorzugt 120 cm, besonders bevorzugt 100 cm, ganz besonders bevorzugt 80 cm.

Bevorzugtes Einsatzgebiet des Kleinfahrzeugs ist der Transport von Senioren, gehbehinderten oder kranken Personen sowie als Transportfahrzeug für Einkäufe und Besorgungen, insbesondere im innerstädtischen Bereich.

Unter dem Begriff "Batterie" sollen Mittel zur Speicherung von elektrischer Energie verstanden werden. Neben Batterien im engeren Sinne sollen insbesondere wiederaufladbare Batterien oder Akkumulatoren von dem Begriff Batterie umfasst sein.

Unter dem Begriff "Grundkörper" wird ein eine ausreichende Steifigkeit besitzender Körper verstanden, der die Funktion des Fahrgestells des Kleinfahrzeugs übernimmt und/oder als Fahrzeugplattform dient. Der Grundkörper bildet die Basis des Fahrzeugs, an welcher wesentliche Fahrzeugteile, wie zum Beispiel die Räder oder eine Lenkvorrichtung, befestigt sind oder welche wesentliche Fahrzeugteile, wie zum Beispiel einen Sitz, Seitenwände oder ein Dach trägt. Der Grundkörper kann beispielsweise als Rahmen, Gestell, oder als blockartiger Körper ausgeführt sein.

Ist der Grundkörper aus Metall, so wird er in einer bevorzugten Ausführungsform durch Tiefziehen bzw. Zugdruckumformen eines oder mehrerer Metallzuschnitte hergestellt.

Das erfindungsgemäße Kleinfahrzeug besitzt einen Grundkörper, an dem die Räder des Fahrzeugs über geeignete Befestigungsmittel befestigt sind. Bei einem vierrädrigen Fahrzeug sind die Räder vorzugsweise seitlich am Grundkörper angebracht. Der Grundkörper kann auch Aussparungen für die Räder aufweisen. In der Regel sind die Radaufhängungen, das heißt die Befestigungen der Räder an dem Grundkörper, noch mit federnden oder dämpfenden Elementen versehen, um den Grundkörper von Vibrationen oder Schlägen der Räder zu entkoppeln.

Der Grundkörper wird auf seiner Oberseite, das heißt auf der im Fahrbetrieb dem Untergrund, beispielsweise der Straße, abgewandten Seite, zu einem großen Teil durch eine im Wesentlichen ebene Ladefläche abgeschlossen. Diese Ladefläche erstreckt sich zumindest über die hintere Hälfte des Grundkörpers, das heißt in Längsrichtung vom hinteren Fahrzeugende bis zur Mitte des Fahrzeugs. Bevorzugt erstreckt sich die Ladefläche vom hinteren Ende des Grundkörpers bis zu den vorderen Rädern oder, bei einem dreirädrigen Fahrzeug, bis zu dem vorderen Rad.

Der Ausdruck "bis zu den vorderen Rädern bzw. dem vorderen Rad" bedeutet bis zu einer Linie quer zur Längsrichtung des Grundkörpers, welche von der Achse der Vorderräder um den halben Raddurchmesser nach hinten verschoben ist. Unter dem Begriff "Längsrichtung" wird die Richtung verstanden, in die sich das Kleinfahrzeug im Geradeauslauf bewegt.

Die den Grundkörper nach oben abschließende im Wesentlichen ebene Ladefläche kann sich auch über die Abmessungen des Grundkörpers hinaus erstrecken. Beispielsweise kann der Grundkörper aus einem Längsträger und mehreren Querträgern bestehen, auf denen eine rechteckige Platte als Ladefläche angebracht ist. Es ist ebenso möglich, die Räder seitlich am Grundkörper zu befestigen und eine Ladefläche vorzusehen, die den Grundkörper und die Räder überdeckt.

Das Kleinfahrzeug ist mit einem elektrischen Antrieb und zumindest einer Batterie als Stromversorgung, als Energiespeicher bzw. als Energiequelle versehen. Der elektrische Antrieb umfasst einen oder mehrere Elektromotoren zum Antrieb des Fahrzeugs. Erfindungsgemäß sind sowohl die Batterie als auch der Elektromotor unterhalb der Ladefläche, das heißt unterhalb der im Wesentlichen ebenen oberen Begrenzung des Grundkörpers, und/oder in den Rädern angeordnet. Auch elektrische Leitungen und sonstige Komponenten des elektrischen Antriebs des Fahrzeugs, wie beispielsweise elektrische Umrichter, Schalter, Leistungsstelleinrichtungen, wie z.B. elektronische Leistungsstellglieder, usw., sind vorzugsweise unterhalb der ebenen Ladefläche vorgesehen. Besonders bevorzugt sind lediglich die für den Fahrer zur Steuerung des Kleinfahrzeugs notwendigen Komponenten, wie ein Ein-/Ausschalter und Mittel zur Geschwindigkeits- und/oder Richtungssteuerung, oberhalb der Ladefläche vorgesehen. Vorzugsweise sind auch mechanische Antriebselemente, wie eine Antriebswelle, unterhalb der Ladefläche vorgesehen.

Erfindungsgemäß wird ein Großteil der Ladefläche nicht durch die Batterie oder den elektrischen Antrieb belegt und steht damit für andere Zwecke, insbesondere für den Transport von Personen oder Gegenständen, zur Verfügung. Sowohl die Batterie als auch der Elektromotor sind in einer bevorzugten Variante unterhalb der Ladefläche angeordnet. In einer anderen Ausführungsform der Erfindung wird die Ladefläche dadurch frei gehalten, dass ein oder mehrere Radnabenmotoren vorgesehen sind, d.h. der oder die Elektromotoren sind in diesem Fall in den Rädern angeordnet.

Durch die erfindungsgemäße Anordnung von Batterie und Elektromotor unterhalb der ebenen Ladefläche oder in den Rädern steht eine relativ große, im Wesentlichen ebene Fläche zur Verfügung, die für den Transport von unterschiedlichsten Gegenständen genutzt werden kann. Zudem wird durch die tiefe Anordnung der Batterie der Schwerpunkt des Fahrzeugs gesenkt, wodurch die Fahreigenschaften verbessert werden. Bei den bisherigen Fahrzeugen wurde insbesondere die Batterie oberhalb des Grundkörpers angeordnet, beispielsweise unterhalb des Sitzes, wodurch die effektive Nutzfläche des Kleinfahrzeugs deutlich reduziert und der Schwerpunkt des Fahrzeugs erhöht wurde.

Erfindungsgemäß wird also ein Unterflurkonzept vorgeschlagen, bei dem die Ladefläche weder durch den Elektromotor noch durch die Batterie verkleinert wird. Der Elektromotor und die Batterie sind unterhalb der im Wesentlichen ebenen Ladefläche oder in den Rädern angeordnet.

In einer bevorzugten Ausführungsform ist die Batterie bzw. sind die Batterien von der Seite, von vorne oder von hinten in den Grundkörper und/oder unter die Ladefläche einschiebbar. Hierzu ist beispielsweise eine Schublade zur Aufnahme der Batterie vorgesehen, in die die Batterie gestellt wird und dann in den Grundkörper und/oder unter die Ladefläche geschoben wird. Von Vorteil wird durch das Einschieben der Batterie in den Grundkörper und/oder unter die Ladefläche die Batterie automatisch mit dem elektrischen System des Fahrzeugs, insbesondere dem Elektromotor, verbunden. Zum Beispiel ist die Schublade mit einem Stecker versehen, an dem die in der Schublade befindliche Batterie angeschlossen ist. Nach dem vollständigen Einschieben der Schublade in den Grundkörper bzw. unter die Ladefläche greift der Stecker in eine im Grundkörper befindliche Steckdose und stellt einen stromleitenden Kontakt zwischen der Batterie und dem elektrischen System des Fahrzeugs her. Die Batterien können wie eine Patrone in das Fahrzeug eingeschoben werden und zum Laden in einer externen Ladestation dem Fahrzeug auf einfache Weise entnommen werden.

Anstelle einer Schublade ist es auch möglich, die Batterie selbst so auszuführen, dass diese in eine entsprechende Öffnung im Grundkörper geschoben werden kann. Hierzu kann die Batterie mit Führungsleisten ausgestattet sein, die mit entsprechenden Führungsleisten in der für die Batterie vorgesehenen Öffnung im Grundkörper zusammenwirken und ein Einschieben der Batterie in den Grundkörper ermöglichen.

Das erfindungsgemäße Kleinfahrzeug dient primär dem Personentransport und ist vorzugsweise für den Transport von einer einzigen Person ausgelegt. Bei Fahrzeugsitzen nach dem Stand der Technik wird die Sitzfläche durch eine zentrale Stütze getragen, welche im Bereich der Längsachse des Kleinfahrzeugs mit dem Grundkörper verbunden ist. Dies hat den Nachteil, dass sperrige Güter nicht mehr unter dem Sitz untergebracht werden können. Häufig ist überhaupt kein Platz mehr auf dem Fahrzeug, um größere Güter transportieren zu können.

Erfindungsgemäß ist eine Sitzvorrichtung vorgesehen, welche eine Sitzfläche umfasst, die von Stützen oder Trägern getragen wird, wobei die Stützen oder Träger an den äußeren seitlichen Enden des Grundkörpers und/oder an den äußeren seitlichen Begrenzungen der Ladefläche angebracht sind. Die Stützen können seitlich am Grundkörper befestigt sein, so dass die freie Nutzfläche auf der Oberseite des Grundkörpers durch die Stützen nicht beschränkt wird. Häufig ist es technisch sinnvoller, die Stützen auf der Oberseite des Grundkörpers anzubringen. In diesem Fall werden die Stützen möglichst weit außen befestigt, so dass zwischen den beiden Stützen ein möglichst großer Bereich der ebenen Grundkörperoberseite bzw. der Ladefläche frei und nutzbar bleibt. Die Stützen belegen höchstens einen Randbereich der Ladefläche. In einem Mittelstreifen beidseitig der Fahrzeuglängsachse ist keine Stütze vorgesehen.

In einer besonders bevorzugten Variante erstreckt sich in Querrichtung des Grundkörpers die freie Länge zwischen den Stützen über mindestens 90% der Querausdehnung der Ladefläche an dieser Stelle. Die Stützen, meist eine oder zwei auf jeder der beiden Seiten, sind so weit außen angebracht, um den Platz unter der Sitzfläche beispielsweise für den Transport von Kisten, großen Taschen oder anderen sperrigen Gütern nutzen zu können. Günstig ist es, die Stützen so vorzusehen, dass deren Außenseiten mit der Außenseite des Kleinfahrzeugs, der Ladefläche und/oder dem Grundkörper abschließen.

Die Sitzfläche ist von Vorteil als Sitzbank ausgeführt, welche sich quer zur Fahrzeuglängsachse erstreckt. Dies hat den Vorteil, dass gegebenenfalls neben dem Fahrer noch eine weitere Person, beispielsweise ein Kind, oder ein kleines Haustier oder kleinere Gepäckstücke mitgenommen werden können. Es ist aber ebenso möglich eine für genau eine Person ausgeführte Sitzfläche, das heißt einen Einzelsitz, vorzusehen. Diese Ausführung erlaubt in der Regel ein bequemeres und stabileres Sitzen. Sowohl bei der Ausführung als Sitzbank als auch beim Vorsehen eines Einzelsitzes ist es zweckmäßig, den Sitz mit einer Rückenlehne und gegebenenfalls mit Armlehnen oder Armstützen auszurüsten.

In einer bevorzugten Variante besitzt die Sitzbank in der Mitte eine Ausbuchtung in Richtung der Längsachse des Fahrzeugs. Die Ausbuchtung ist so gestaltet, dass sich der Fahrer rittlings darauf setzen kann, das heißt der Fahrer sitzt auf der Sitzausbuchtung wie auf einem Motorrad oder Roller. Auf der sich quer zur Fahrzeuglängsachse erstreckenden Sitzbank kann eine weitere Person hinter dem Fahrer Platz nehmen.

Es ist auch möglich, anstelle der quer zur Fahrzeuglängsachse sich erstreckenden Sitzbank eine sich in Längsrichtung erstreckende Sitzbank vorzusehen, welche mittels geeigneter Streben oder Halterungen an den seitlichen Stützen befestigt ist. Die Sitzbank kann so lang sein, dass ein oder zwei Personen darauf Platz finden. Insbesondere wenn das erfindungsgemäße Kleinfahrzeug so schmal ausgeführt ist, dass zwei Personen nebeneinander nur schlecht Platz finden, hat sich die Platzierung der beiden Personen hintereinander aus ergonomischen Gründen und hinsichtlich der Bequemlichkeit als vorteilhaft erwiesen.

Es ist ferner günstig, die Sitzvorrichtung mit einer Höhenverstellung zu versehen. Die Höhenverstellung ist dabei von Vorteil in die seitlichen Stützen integriert. Eine solche Höhenverstellung ist bei einer quer zur Fahrzeuglängsachse orientierten Sitzbank, bei einer längs zur Fahrzeuglängsachse orientierten Sitzbank, bei der oben beschriebenen Sitzbankvariante mit Ausbuchtung oder auch bei einem Einzelsitz von Vorteil.

Wie oben erwähnt, ist das erfindungsgemäße Fahrzeug mit einer Sitzvorrichtung ausgestattet, um den Personentransport zu erleichtern bzw. komfortabler zu machen. Der Transport sehr großer Güter kann aber durch das Vorhandensein einer fest installierten Sitzvorrichtung erschwert oder gar unmöglich gemacht werden. Von Vorteil ist die Sitzvorrichtung daher mit Schnellverschlusseinrichtungen versehen, so dass diese schnell und einfach mit dem Fahrzeug verbunden oder von diesem getrennt werden kann. Nach dem Entfernen der Sitzvorrichtung kann das Kleinfahrzeug im Stehen gesteuert werden, so dass ausreichend Platz für den Gepäck- oder Warentransport verbleibt.

Von Vorteil besitzt das Kleinfahrzeug vier Räder. Grundsätzlich werden die erfindungsgemäßen Vorteile der freien, relativ großen ebenen Ladefläche auch bei dreirädrigen Fahrzeugen erzielt. Besonders günstig wirkt sich die Erfindung aber bei vierrädrigen Kleinfahrzeugen aus, da diese auch bei größerer Beladung, wie diese durch die Erfindung ermöglicht wird, nicht kippen.

Die Steuerung des Kleinfahrzeugs erfolgt vorzugsweise über eine Lenkvorrichtung mit einer Lenksäule, welche mit dem Grundkörper oder der Ladefläche in dessen bzw. in deren vorderen Drittel verbunden ist. Die hinteren Zweidrittel der Oberseite des Grundkörpers bzw. der Ladefläche können damit für den Transport von Personen und/oder Material genutzt werden.

Es ist weiterhin günstig, die Lenksäule mit einem Klappmechanismus zu versehen, so dass diese beispielsweise beim Abstellen des Kleinfahrzeugs nach unten auf den Grundkörper oder die Ladefläche geklappt werden kann. Zudem kann die Lenksäule durch Veränderung ihrer Neigung an verschieden große Fahrer angepasst werden oder sogar soweit nach oben geklappt werden, dass ein Fahren im Stehen ermöglicht wird.

In einer weiteren bevorzugten Variante erstreckt sich die ebene Ladefläche über zumindest 60%, bevorzugt mindestens 70%, besonders bevorzugt mindestens 80% der Fläche des Grundkörpers. Zumindest 60%, bevorzugt mindestens 70%, besonders bevorzugt mindestens 80% der Oberseite des Grundkörpers werden also durch eine im Wesentlichen ebene Fläche gebildet.

Der Grundkörper kann beispielsweise als Rahmen oder Gestell ausgeführt sein oder mehrere miteinander verbundene Träger umfassen. Die im Wesentlichen ebene Ladefläche wird in diesem Fall vorzugsweise durch ein oder mehrere Platten oder Bleche gebildet, die auf den Rahmen oder das Gestell montiert werden.

In einer anderen bevorzugten Ausführungsform ist der Grundkörper aus wenigen, beispielsweise maximal fünf, Einzelteilen aufgebaut. Der Grundkörper kann zum Beispiel aus einem oder mehreren Gussteilen zusammengesetzt sein oder aus geeignetem Kunststoffmaterial oder Verbundmaterial bestehen. Entsprechende Befestigungsstellen dienen zur Aufnahme der Lenkvorrichtung, der Batterie, des Elektromotors, der Räder und/oder weiterer Federungs- oder Dämpfungselemente.

Die im Wesentlichen ebene Ladefläche kann erfindungsgemäß zur Aufnahme von Gütern genutzt werden, da bei dem erfindungsgemäßen Unterflurkonzept wesentliche Teile des Antriebs und der Steuerung des Kleinfahrzeugs unter der Ladefläche angeordnet sind. Bevorzugt ist die ebene Ladefläche an ihrer Oberseite mit Befestigungsmitteln, insbesondere Ösen, Schienen oder Netzen, zur Befestigung und/oder Sicherung von Gütern auf der Ladefläche versehen. Die Befestigungsmittel können auch an spezielle Transportbehältnisse, wie Kisten oder Truhen, angepasst sein, um diese schnell und einfach auf der Ladefläche zu fixieren.

In einer weiteren bevorzugten Ausführungsform ist mindestens ein Transportbehälter vorgesehen, der an einer Stelle außerhalb der ebenen Ladefläche auf oder an dem Kleinfahrzeug angebracht wird. Insbesondere im vorderen Bereich des Fahrzeugs ist häufig die Lenksäule am Grundkörper befestigt und erlaubt daher keine durchgehende ebene Ladefläche. Zur Vergrößerung des Ladevolumens ist es günstig, einen Transportbehälter vorzusehen, der an solchen Stellen des Fahrzeugs befestigt wird, die ansonsten nicht zur Beladung zur Verfügung stehen.

Besonders bevorzugt erstreckt sich der Transportbehälter über den vorderen Teil des Fahrzeugs bis hinter die Vorderräder. Der Transportbehälter ist bevorzugt als Korb oder Kiste ausgebildet und mit einem Schnellverschluss an dem Fahrzeug befestigt. Für Einkäufe kann der Transportbehälter somit leicht vom Fahrzeug abmontiert und mitgenommen werden. Der Transportbehälter kann auch mit Rollen versehen werden, so dass er nach dem Abnehmen vom Fahrzeug geschoben oder gezogen werden kann und nicht getragen werden muss.

Aus Sicherheitsgründen ist es vorteilhaft, seitliche Streben auf Höhe des Einstiegs zur Sitzvorrichtung vorzusehen. Vorzugsweise wird dies dadurch erreicht, dass ein im Wesentlichen U-förmiger Bügel vorgesehen ist, welcher drehbar gelagert ist. Unter einem U-förmigen Bügel wird ein Bügel verstanden, der zwei im Wesentlichen gerade Schenkel und eine die beiden Schenkel verbindende Querstrebe besitzt. Die Enden seiner beiden Schenkel werden vorzugsweise an den Stützen der Sitzvorrichtung, bevorzugt an deren oberen Ende, befestigt. Zum Einsteigen wird der Bügel nach oben geklappt, so dass die beiden Schenkel schräg oder senkrecht nach oben gerichtet sind. Nachdem der Fahrer auf dem Sitz Platz genommen hat, wird der Bügel nach unten geklappt, so dass die beiden Schenkel des U-förmigen Bügels neben der Sitzvorrichtung positioniert sind.

In einer weiteren Ausführungsform ist mindestens ein weiterer Bügel vorgesehen und zwischen den beiden Bügeln ist ein folienartiges Material befestigt. Unter einem folienartigen Material wird insbesondere ein dünnes, flexibles, flächiges Material verstanden, beispielsweise ein Gewebe, insbesondere ein Textilgewebe, eine PVC- oder andere Kunststoffplane oder ein Gummimaterial. Von Vorteil ist das folienartige Material wetterfest, witterungsbeständig, wasserdicht und/oder zumindest zum Teil durchsichtig.

Das folienartige Material erstreckt sich über die Breite der Bügel, das heißt über die Länge der die beiden Schenkel des U-förmigen Bügels verbindenden Querstrebe. Der weitere Bügel kann entweder in einer bestimmten Position, bevorzugt einer im Wesentlichen senkrechten Stellung, fixiert oder ebenfalls beweglich angeordnet sein. Durch Bewegen der beiden Bügel relativ zueinander kann das folienartige Material zwischen den beiden Bügeln aufgespannt werden. Das folienartige Material bildet dann eine Fläche zwischen den Querstreben der beiden Bügel, die je nach Orientierung der Bügel als Dach für den Fahrer oder als Windschutzscheibe dient. Die Bügel bilden somit zusammen mit dem folienartigen Material ein Verdeck bzw. eine bewegliche Abdeckung.

Vorzugsweise wird das folienartige Material auch zwischen den Schenkeln zweier Bügel aufgespannt und bildet dann einen seitlichen Schutz, beispielsweise gegen Regen oder Spritzer.

Bevorzugt werden mehr als zwei, insbesondere drei Bügel zum Aufspannen des folienartigen Materials vorgesehen.

In einer bevorzugten Ausführungsform ist die Ladefläche oder ein Teil der Ladefläche als Solarmodul oder Photovoltaikmodul ausgeführt. Von Vorteil dient ein möglichst großer Teil der Ladefläche, bevorzugt mehr als 50%, besonders bevorzugt mehr als 75 %, ganz besonders bevorzugt mehr als 90 % der Ladefläche, als Solarmodul.

Die Begriffe Solarmodul und Photovoltaikmodul werden gleichbedeutend verwendet und sollen ein System beschreiben, welches mehrere Solarzellen umfasst, mittels derer Licht in elektrische Energie umgewandelt wird. Wird das Kleinfahrzeug abgestellt, wird die erzeugte elektrische Energie zum Aufladen der Batterie verwendet. Auch während des Fahrbetriebs wird durch direkte oder indirekte Sonneneinstrahlung auf das Solarmodul elektrische Energie erzeugt, welche dann zum Antrieb des Elektromotors und/oder zum Aufladen der Batterie dient.

Das Solarmodul ist vorzugsweise trittfest, begehbar und/oder wasserfest ausgeführt, so dass auch der mit dem Solarmodul belegte Teil der Ladefläche vom Fahrer betreten und für den Transport von Gütern genutzt werden kann. Das Solarmodul kann an seiner Oberseite beispielsweise durch Glas, transparenten Kunststoff, Epoxydharz, Gießharz oder geeignete Folien geschützt sein. Es können zum Beispiel Folien-Rückseiten-Module, laminierte Glas-Glas-Module, Glas-Glas-Module in Gießharztechnik, Glas-Glas-Module in Verbundsicherheitsfolien-Technologie (PVB Folien), Dünnschicht-Module hinter Glas oder als flexible Beschichtung, z. B. auf Kupferband, oder Fluoreszenz-Kollektoren eingesetzt werden. Die Solarzellen können auch auf einer dünnen Trägerplatte, meist aus Metall, aufgebracht werden und mit einer witterungsbeständigen, transparenten Folie abgedeckt werden.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: ein erfindungsgemäßes Kleinfahrzeug,
- Figur 2: eine alternative Ausführung des erfindungsgemäßen Kleinfahrzeugs,
- Figur 3: die Komponenten des Kleinfahrzeugs gemäß Figur 1 im Detail,
- Fig. 4 und 5: eine weitere Variante der Erfindung,
- Figur 6: eine Seitenansicht des Kleinfahrzeugs mit Batterieeinschüben und
- Figur 7: eine alternative Ausführung der Sitzbank des Fahrzeugs.

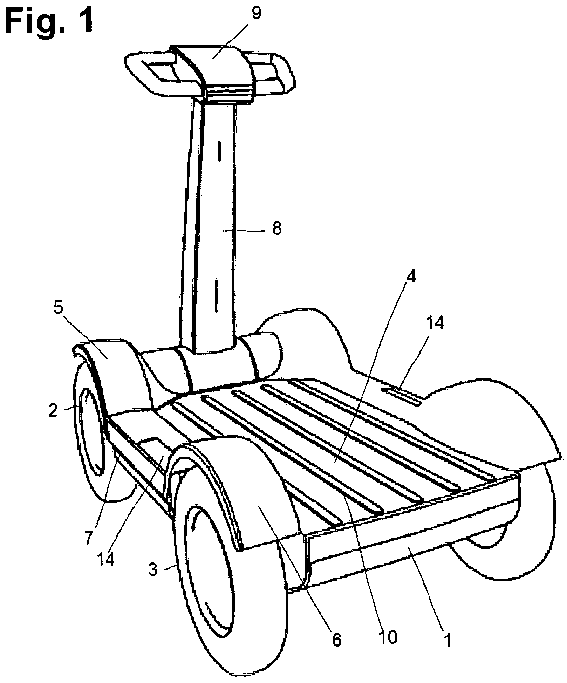

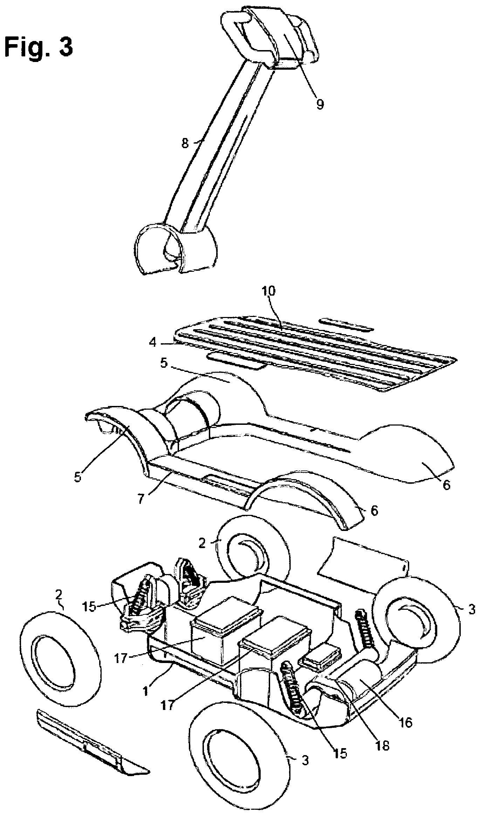

Das in den Figuren 1 und 3 gezeigte Kleinfahrzeug besitzt einen beispielsweise aus Spritzguss hergestellten blockförmigen Grundkörper 1, der als Fahrgestell und Fahrzeugplattform dient. Der Grundkörper 1 besteht im Wesentlichen aus zwei Spitzgussteilen, die miteinander verbunden werden und den blockförmigen Grundkörper 1 bilden. Der Grundkörper 1 wird durch einen in der Draufsicht im Wesentlichen rechteckförmigen Körper gebildet, der sich in Fahrzeuglängsrichtung erstreckt, und der an seinen beiden Längsseiten jeweils eine in der Draufsicht ebenfalls rechteckförmige Erweiterung 7 besitzt.

Der Grundkörper 1 oder Teile des Grundkörpers 1 können auch durch Tiefziehen bzw. Zugdruckumformen eines oder mehrerer Metallzuschnitte oder auf andere Weise, beispielsweise mittels Spritzpressverfahren oder Strangziehen, gefertigt werden. Der Grundkörper 1 kann auch aus Kunststoff, aus Metall und Kunststoff, aus Verbundmaterialen, beispielsweise Faserverbundstoffen, oder anderen Materialien gefertigt sein.

An beiden Längsseiten des Grundkörpers 1 sind jeweils zwei Vorderräder 2 und zwei Hinterräder 3 angebracht. Der Grundkörper 1 weist hierfür geeignete, in Figur 1 nicht dargestellte Befestigungspunkte auf. Zudem sind, wie in Figur 3 zu erkennen, die Räder 2, 3 mit Feder- und Dämpfungsmitteln 15 gegenüber dem Grundkörper 1 federnd gelagert.

Die Hinterräder 3 werden über einen Elektromotor 16 angetrieben. Der Elektromotor 16 sowie zwei als Stromversorgung dienende Akkumulatoren 17 sowie die für die Stromversorgung des Elektromotors notwendigen Kabel und der Antriebsstrang 18 zur Übertragung der Kraft vom Elektromotor 16 auf die Antriebsräder 3 werden im Inneren des Grundkörpers 1 aufgenommen. Zum Laden der Akkumulatoren 17 sind an einer Außenseite des Grundkörpers 1 entsprechende Anschlüsse vorgesehen.

Die Oberseite des Grundkörpers 1 wird durch eine im Wesentlichen ebene Ladefläche 4 gebildet. An den Längsseiten des Grundkörpers 1 sind über den Rädern 2, 3 Kotflügel 5, 6 angebracht. Der vordere Kotflügel 5 und der hintere Kotflügel 6 schließen sich jeweils an die seitlichen Trittbretter 7 an, so dass in der Draufsicht der Grundkörper 1, die Kotflügel 5, 6 und die Trittbretter 7 eine im Wesentlichen rechteckförmige Fläche bilden.

Im vorderen Bereich des Fahrzeugs zwischen den vorderen Rädern 2 ist auf dem Grundkörper 1 eine Lenksäule 8 befestigt, welche in ihrer Neigung verstellbar ist. Die Lenksäule 8 kann in eine, wie in Figur 1 dargestellt, im Wesentlichen senkrechte Position oder auch durch Kippen nach hinten oder vorne in eine schräge Position gebracht und so an unterschiedliche Fahrergrößen angepasst werden. Die Lenksäule 8 kann, beispielsweise nach dem Abstellen des Fahrzeugs, auch in eine nahezu waagrechte Lage geklappt werden.

Am oberen Ende der Lenksäule 8 ist eine Bedieneinheit 9 vorgesehen, mit deren Hilfe die vorderen Räder 2 gelenkt, der Elektromotor 16 angesteuert und so das Kleinfahrzeug gefahren werden kann. Die Bedieneinheit 9 umfasst einen Ein- und Ausschalter für den Elektromotor 16, einen Geschwindigkeitsregler sowie gegebenenfalls weitere Schalter und Regler, um beispielsweise andere elektrische Einrichtungen am Kleinfahrzeug, wie eine Beleuchtung, zu schalten oder zu regeln.

Unterhalb der Ladefläche 4 sind der Elektromotor 16, die Akkumulatoren 17, alle Elemente zur Übertragung der Kraft vom Elektromotor 16 auf die Räder 3 sowie zumindest teilweise die Radaufhängungen 15 angeordnet. Auf diese Weise wird eine möglichst große freie Ladefläche 4 erzielt.

Die Ladefläche 4 des Grundkörpers 1 ist mit Befestigungsschienen 10 versehen, die sich in Längsrichtung der Ladefläche 4 erstrecken und an denen zu transportierende Güter fixiert werden können. Anstelle der oder zusätzlich zu den Befestigungsschienen 10 können auch Ösen oder Haken zur Befestigung von Transportgut vorgesehen sein. Ebenso ist es möglich, auf dem Grundkörper 1 ein Solarmodul anzubringen, welches auch als Ladefläche 4 dient. Das Solarmodul ist witterungsbeständig und trittfest ausgeführt.

In der in der Figur 1 dargestellten Ausführungsform kann das Fahrzeug durch eine auf dem Fahrzeug stehende Person oder eine vor oder neben dem Fahrzeug laufende Person gesteuert werden.

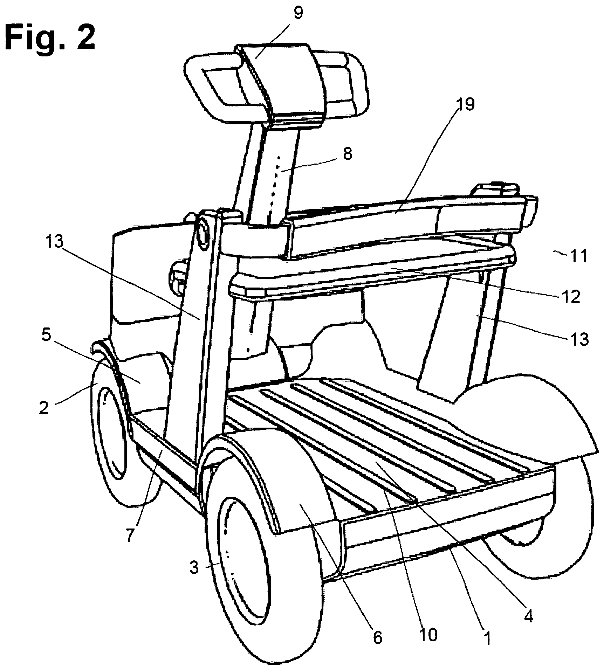

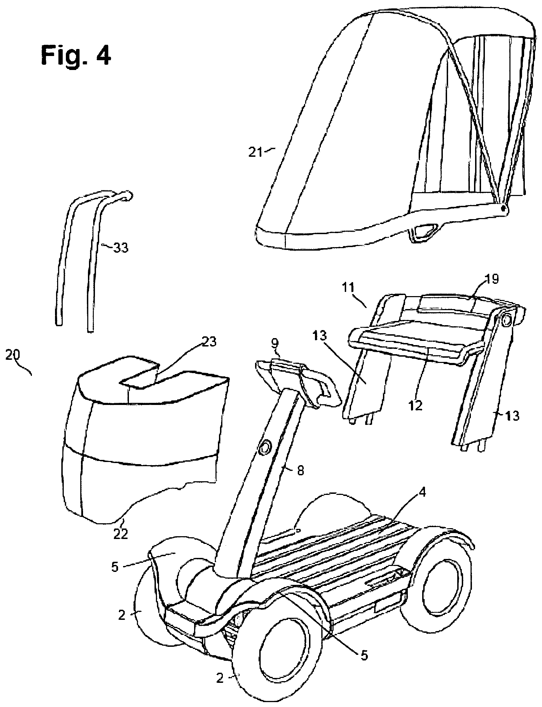

Figur 2 zeigt eine Variante des Kleinfahrzeugs nach Figur 1 mit einer Sitzbank 11 (siehe auch die Explosionszeichung Figur 4). Die Sitzbank 11 weist eine Sitzfläche 12 auf, die sich über die gesamte Breite des Kleinfahrzeugs, das heißt quer zu dessen Längsrichtung, erstreckt. Die Sitzbank 12 ist an ihren beiden äußeren Enden mit Stützen 13 versehen, die in entsprechende Ausnehmungen 14 (siehe Figur 1) greifen und dort mit Schnellverschlüssen befestigt werden können. Auf diese Weise lässt sich das in Figur 1 gezeigte erfindungsgemäße Fahrzeug schnell für ein Fahren im Sitzen umrüsten.

Die Sitzbank 11 ist ferner mit einer Rückenlehne 19 versehen, die an den Seiten der Sitzfläche 12 etwas nach vorne gezogen ist und an den Stützen 13 befestigt ist. Die Oberseiten der Stützen 13 können auch als Armstütze dienen.

Die Stützen 13 der Sitzbank 11 sind am äußeren Ende der seitlichen Erweiterungen 7 des Grundkörpers 1 in den Ausnehmungen 14 fixiert. An ihrer Außenseite schließen die Stützen 13 mit der Außenseite der Ladefläche 4 ab. Zwischen den beiden Stützen 13 ist nahezu über die gesamte Breite des Fahrzeugs die Ladefläche 4 frei für den Transport von Gegenständen nutzbar.

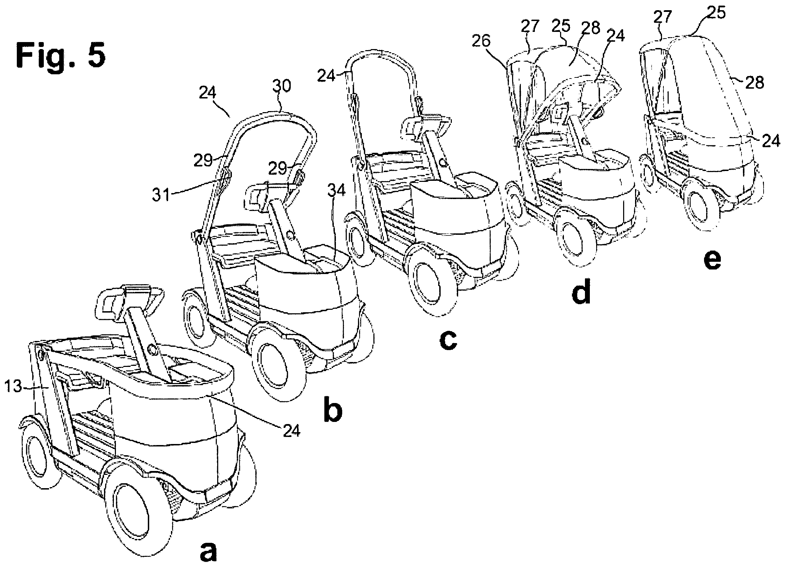

In den Figuren 4 und 5 ist eine weitere Variante des erfindungsgemäßen Kleinfahrzeugs dargestellt. Das gezeigte Fahrzeug entspricht der Ausführung gemäß Figur 2, weist aber zusätzlich einen Transportkorb 20 sowie ein Dach 21 auf.

Der Transportkorb 20 kann auf dem vorderen Teil des Kleinfahrzeugs angebracht werden. Der Transportkorb 20 wird dazu von vorne und/oder oben auf das Fahrzeug aufgesetzt. Das untere Ende 22 des Transportkorbs 20 ist so ausgebildet, dass der Korb 20 mit den vorderen Kotflügeln 5 abschließt. Der Korb 20 erstreckt sich in Längsrichtung vorzugsweise vom vorderen Ende des Fahrzeugs bis hinter die Vorderradachse. Der Transportkorb 20 weist außerdem einen Einschnitt 23 für die Lenksäule 8 auf, so dass die Lenksäule 8 auch bei angebrachtem Korb 20 in ihrer Neigung geändert werden kann.

Durch den Transportkorb 20 wird das Ladevolumen des Kleinfahrzeugs deutlich vergrößert. Der Bereich zwischen den Vorderrädern 2, in dem auch die Lenksäule 8 befestigt ist, kann so ebenfalls für Transportzwecke genutzt werden.

Der Transportkorb 20 ist vorzugsweise mit einer Schnellarretierung zur Befestigung am Fahrzeug versehen. Der Transportkorb 20 kann so schnell und einfach auf dem Fahrzeug montiert werden bzw. demontiert werden, wenn dieser nicht benötigt wird. Von Vorteil weist der Transportkorb 20 einen Tragebügel und/oder Rollen auf, um diesen nach Entfernung vom Fahrzeug leicht tragen bzw. bewegen zu können. Der Transportkorb 20 kann beispielsweise für Einkäufe genutzt werden.

Von Vorteil ist weiterhin ein Metallbügel 34 vorgesehen, der vor der Lenksäule 8 am Fahrzeug befestigt wird (siehe Figuren 4 und 5). Der Metallbügel 34, insbesondere ein Stahl- oder Aluminiumbügel, bringt folgende Vorteile bzw. Funktionen:
- Der Metallbügel 34 unterstützt die Arretierung und Befestigung des Transportkorbes 20 am Fahrzeug.
- Von Vorteil ist der Metallbügel 34 als Rohr oder Rundstahl ausgeführt, so dass Fahrradzubehör, wie beispielsweise zusätzliche Beleuchtungseinrichtungen, Klingel, Gepäckhalterungen und ähnliches, einfach an dem Metallbügel 34 angebracht werden können.
- An dem Metallbügel 34 können außerdem Haken oder Ösen zur Befestigung von Gepäck, beispielsweise zum Anhängen von Taschen oder Tüten, angeschweißt oder anderweitig angebracht werden.

Die Figuren 4 und 5 zeigen außerdem ein Dach oder Verdeck 21, welches zusätzlich an dem Fahrzeug angebracht werden kann. Das Dach 21 besitzt einen U-förmigen Bügel 24, der an den Stützen 13 des Sitzes 11 drehbar befestigt ist. Der Bügel 24 kann, wie in Figur 5 dargestellt, in verschiedene Positionen gebracht werden. Wird der Bügel 24 in eine im Wesentlichen waagrechte Position geklappt (Figur 5b), so dient der Bügel 24 als Sicherung des Fahrers gegen ein unbeabsichtigtes Herausfallen. Zum Ein- und Aussteigen kann der Bügel, wie in den Figuren 5b und 5c gezeigt, nach oben bewegt werden. Die Bedienung des Bügels 24 wird durch einen an dem Bügel 24 angebrachten Handgriff 31 erleichtert.

An den Stützen 13 sind zwei weitere U-förmige Bügel 25, 26 drehbar befestigt. Alle Bügel 24, 25, 26 sind im Wesentlichen U-förmig mit zwei Schenkeln 29 und einem die beiden Schenkel des "U" verbindenden Querstück 30 ausgeführt. Die Bügel 25, 26 können entweder an dem Bügel 24 fixiert werden oder Bügel 24 weist eine Einbuchtung auf, in die die Bügel 25, 26 eingeschoben werden können. Auf diese Weise können die Bügel 25, 26 gemeinsam mit dem Bügel 24 bewegt werden, wie dies in den Figuren 5a-c gezeigt ist.

Zwischen den Bügeln 24, 25, 26 sind zwei, vorzugsweise wetterfeste, wasserdichte, flexible stoff- oder folienartige Segmente 27, 28 befestigt. Die Segmente 27, 28 bestehen beispielsweise aus einem Textilgewebe oder einer Kunststofffolie. Das durch die Bügel 25 und 26 aufgespannte Segment 27 bildet ein Dach über dem Sitz 11 für den Fahrer als Regen- und Sonnenschutz. Ebenso ist es günstig, am hintersten Bügel 26 eine weitere Folie, Stoff- oder Gewebebahn anzubringen, welche bei aufgespanntem Verdeck hinter dem Fahrer herunterhängt und so den Fahrer zusätzlich vor Witterungseinflüssen schützt. Sowohl dieser rückwärtige Abschluss des Verdecks als auch eventuell vorhandene Seitenwände und/oder das vordere Segment 28 können außerdem an ihren jeweiligen unteren Enden am Fahrzeug befestigt sein, beispielsweise mittels Druckknöpfen.

Im heruntergeklappten Zustand, in dem der Bügel 24 in die im Wesentlichen waagrechte Position gedreht ist, dient das Segment 28 zwischen dem Bügel 24 und dem Bügel 25 als Windschutzscheibe des Fahrzeugs. Das Segment 28 besteht in diesem Fall zumindest teilweise aus einem durchsichtigen Material.

Anstelle von zwei zusätzlichen Bügeln 25, 26 können selbstverständlich auch noch weitere Bügel vorgesehen sein. Ebenso ist es möglich, die Segmente 27, 28 von dem Befestigungspunkt der Bügel 24, 25, 26 an der einen Stützen 13 bis zu dem Befestigungspunkt der Bügel 24, 25, 26 an der anderen Stützen 13 zu ziehen. Dadurch werden durch die Schenkel 29 der Bügel 24, 25, 26 auch Seitenwände aufgespannt.

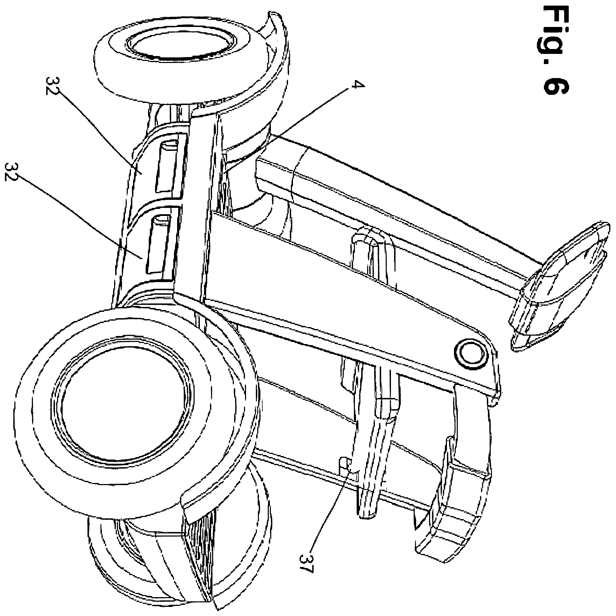

In Figur 6 ist ein weiteres vorteilhaftes Detail des erfindungsgemäßen Kleinfahrzeugs dargestellt. An der Längsseite des Fahrzeugs sind zwei Einschübe 32 vorgesehen. Die Einschübe 32 dienen zur Aufnahme der Batterien bzw. Akkumulatoren. Die Batterien werden in die Einschübe 32 gesetzt und an in den Einschüben 32 befindliche elektrische Anschlüsse angeschlossen. Die elektrischen Anschlüsse stehen in stromleitender Verbindung mit weiteren an den Einschüben 32 vorgesehenen elektrischen Kontakten. Nach dem Einschieben der Einschübe 32 in die entsprechenden Öffnungen unterhalb der Ladefläche 4 kommen die elektrischen Kontakte der Einschübe 32 mit Gegenkontakten in stromleitende Verbindung, wodurch die Batterie automatisch an das elektrische System des Fahrzeugs, insbesondere an den Elektromotor, angeschlossen wird.

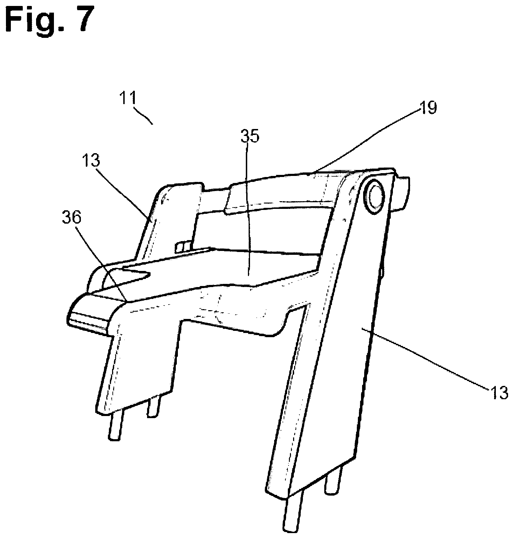

Schließlich ist in Figur 7 eine alternative Ausführung der Sitzbank gezeigt. Die Sitzbank ist, wie die in den Figuren 2 und 4 dargestellte Sitzbank, an seitlichen Stützen 13 befestigt. Die Oberseiten der Stützen 13 können auch als Armstütze dienen. Ferner ist ebenso eine Rückenlehne 19 vorgesehen.

Zusätzlich weist aber die Sitzfläche 35 in der Mitte eine Erweiterung 36 auf, so dass die Sitzfläche 35, 36 in der Draufsicht ein T-förmiges Aussehen erhält. Auf der vorderen Ausbuchtung 36 kann der Fahrer rittlings Platz nehmen. Ein Mitfahrer findet hinter dem Fahrer auf der Sitzfläche 35 Platz.

Die gesamte Sitzfläche 35, 36 ist, ebenso wie die in den Figuren 2 und 4 gezeigte Sitzfläche 12, in der Höhe verstellbar. Hierfür sind in den seitlichen Stützen 13 entsprechende Arretierungs- oder Einrastmöglichkeiten zur Befestigung der Sitzbank auf unterschiedlichen Höhen vorgesehen. In Figur 6 ist eine solche Höhenverstellung mit dem Bezugszeichen 37 zu erkennen.

## Patentansprüche

1. Kleinfahrzeug für den Personentransport
- mit einem elektrischen Antrieb, der zumindest einen Elektromotor (16) umfasst,
- mit einer Batterie (17),
- mit einem Grundkörper (1), der sich längs von einem vorderen und zu einem hinteren Ende erstreckt, wobei an dem Grundkörper (1) ein oder zwei vordere Räder (2) und zumindest zwei hintere Räder (3) befestigt sind, und
- mit einer Lenkvorrichtung (8, 9) zum Lenken von einem oder mehreren der Räder (2),
wobei zumindest die hintere Hälfte des Grundkörpers (1) nach oben durch eine im Wesentlichen ebene Ladefläche (4) begrenzt wird und wobei der Elektromotor (16) und die Batterie (17) unterhalb der Ladefläche (4) oder in einem oder mehreren der Räder (2, 3) angeordnet sind, wobei eine Sitzvorrichtung (11) vorgesehen ist, welche eine Sitzfläche (12) umfasst, die von Stützen (13) getragen wird, wobei die Stützen (13) an den äußeren seitlichen Enden des Grundkörpers (1) oder der Ladefläche (4) angebracht sind und wobei Schnellverschlusseinrichtungen zur Fixierung der Sitzvorrichtung (11) an dem Kleinfahrzeug vorgesehen sind, **dadurch gekennzeichnet, dass** sich die Ladefläche (4) über zumindest 80% des Grundkörpers (1) erstreckt.

2. Kleinfahrzeug nach Anspruch 1, **dadurch gekennzeichnet, dass** der Grundkörper (1) zumindest in dem Bereich zwischen dem oder den vorderen Rädem (2) und dem hinteren Ende des Grundkörpers (1) nach oben durch eine im Wesentlichen ebene Ladefläche (4) begrenzt wird und dass der Elektromotor (16) und die Batterie (17) unterhalb der Ladefläche (4) oder in einem oder mehreren der Räder (2, 3) angeordnet sind.

3. Kleinfahrzeug nach einem der Ansprüche 1 oder 2, **dadurch gekennzeichnet, dass** die Lenkvorrichtung (8, 9) eine Lenksäule (8) umfasst, welche mit dem Grundkörper (1) in dessen vorderen Drittel verbunden ist.

4. Kleinfahrzeug nach Anspruch 3, **dadurch gekennzeichnet, dass** die Neigung der Lenksäule (8) in Bezug auf die Ladefläche (4) verändert werden kann.

5. Kleinfahrzeug nach einem der Ansprüche 1 bis 4, **dadurch gekennzeichnet, dass** die Ladefläche (4) Befestigungsmittel (10), insbesondere Ösen oder Schienen, zur Befestigung von Gütern auf der Ladefläche aufweist.

6. Kleinfahrzeug nach einem der Ansprüche 1 bis 5, **dadurch gekennzeichnet, dass** mindestens ein Transportbehälter (20) vorgesehen ist, der auf oder an dem Kleinfahrzeug an einer Stelle außerhalb der Ladefläche (4) angebracht werden kann.

7. Kleinfahrzeug nach einem der Ansprüche 1 bis 6, **dadurch gekennzeichnet, dass** ein drehbar gelagerter, im Wesentlichen U-förmiger Bügel (24) vorgesehen Ist.

8. Kleinfahrzeug nach Anspruch 7, **dadurch gekennzeichnet, dass** mindestens ein weiterer Bügel (25, 26) vorgesehen ist und zwischen den beiden Bügeln (24, 25, 26) ein folienartiges Material (27, 28) befestigt ist.

9. Kleinfahrzeug nach einem der Ansprüche 1 bis 8, **dadurch gekennzeichnet, dass** die Batterie (17) unter die Ladefläche (4) einschiebbar ist.

10. Kleinfahrzeug nach einem der Ansprüche 1 bis 9, **dadurch gekennzeichnet, dass** die Setzvorrichtung (11) eine quer zur Fahrzeuglängsachse orientierte Sitzbank (35) aufweist, welche eine sich in Fahrzeuglängsachse erstreckende Ausbuchtung (36) besitzt.

11. Kleinfahrzeug nach einem der Ansprüche 1 bis 10, dadurch gekenntzeichnet, dass die Sitzvorrichtung (11) höhenverstellbar ist.

12. Kleinfahrzeug nach einem der Ansprüche 1 bis 11, dadurch gekenntzeichnet, dass zumindest ein Teil der Ladefläche (4) als Solarmodul ausgeführt ist.

## Claims

1. Small vehicle for transporting persons,
- having an electric drive which comprises at least one electric motor (16),
- halving a battery (17),
- having a base body (1) which extends longitudinally from a front and to a rear end, wherein one or two front wheels (2) and at least two rear wheels (3) are fastened to the base body (1), and
- having a steering device (8, 9) for steering one or more of the wheels (2), wherein at least the rear half of the base body (1) is bounded in the upward direction by an essentially level loading surface (4), and wherein the electric motor (16) and the battery (17) are arranged underneath the loading surface (4) or in one or more of the wheels (2, 3), wherein a seating device (11) is provided which comprises a seating surface (12) which is mounted by supports (13), wherein the supports (13) are mounted at the outer lateral ends of the base body (1) or of the loading surface (4) and wherein quick-release devices are provided for securing the seating device (11) to the small vehicle **characterized in that** the loading surface (4) extends over at least 80% of the base body (1).

2. Small electric vehicle according to Claim 1, **characterized in that** the base body (1) is bounded at least in the region between the front wheel or wheels (2) and the rear end of the base body (1) in the upward direction by a substantially level loading surface (4), and **in that** the electric motor (16) and the battery (17) are arranged underneath the loading surface (4) or in one or more of the wheels (2, 3).

3. Small vehicle according to one of Claims 1 and 2, **characterized in that** the steering device (8, 9) comprises a steering column (8) which is connected to the base body (1) in the front third thereof.

4. Small vehicle according to Claim 3, **characterized in that** the inclination of the steering column (8) with respect to the loading surface (4) can be changed.

5. Small vehicle according to one of Claims 1 to 4, **characterized in that** the loading surface (4) has attachment means (10), in particular eyelets or rails, for attaching goods to the loading surface.

6. Small vehicle according to one of Claims 1 to 5, **characterized in that** at least one transportation container (20) is provided which can be attached on or to the small vehicle at a location outside the loading surface (4).

7. Small vehicle according to one of Claims 1 to 6, **characterized in that** a rotatably mounted, substantially u-shaped bar (24) is provided.

8. Small vehicle according to Claim 7, **characterized in that** at least one further bar (25, 26) is provided, and a film-like material (27, 28) is fastened between the two bars (24, 25, 26).

9. Small vehicle according to one of Claims 1 to 8, **characterized in that** the battery (17) can be inserted under the loading surface (4).

10. Small vehicle according to one of Claims 1 to 9, **characterized in that** the seating device (11) has a seating bench (35) which is oriented transversely with respect to the longitudinal axis of the vehicle and which has a projecting part (36) extending in the longitudinal axis of the vehicle.

11. Small vehicle according to one of Claims 1 to 10, **characterized in that** the seating device (11) has is vertically adjustable.

12. Small vehicle according to one of Claims 1 to 11, **characterized in that** at least part of the loading surface (4) is embodied as a solar module.

## Revendications

1. Petit véhicule pour le transport de personnes,
- avec un entraînement électrique, qui comprend au moins un moteur électrique (16),
- avec une batterie (17),
- avec un corps de base (1), qui s'étend en longueur d'une extrémité avant à une extrémité arrière, dans lequel une ou deux roue (s) avant (2) et au moins deux roues arrière (3) sont fixées au corps de base (1), et
- avec un dispositif de direction (8, 9) pour la direction d'une ou de plusieurs des roues (2),
dans lequel au moins la moitié arrière du corps de base (1) est limitée vers le haut par une face de chargement essentiellement plane (4) et dans lequel le moteur électrique (16) et la batterie (17) sont disposés en dessous de la face de chargement (4) ou dans une ou plusieurs des roues (2, 3),
dans lequel il est prévu un dispositif de siège (11), qui comprend une face d'assise (12), qui est supportée par des montants (13), dans lequel les montants (13) sont placés aux extrémités latérales extérieures du corps de base (1) ou de la face de chargement (4) et dans lequel il est prévu des dispositifs de verrouillage rapide pour la fixation du dispositif de siège (11) sur le petit véhicule, **caractérisé en ce que** la face de chargement (4) s'étend sur au moins 80 % du corps de base (1).

2. Petit véhicule selon la revendication 1, **caractérisé en ce que** le corps de base (1) est limité vers le haut, au moins dans la région comprise entre la ou les roue (s) avant (2) et l'extrémité arrière du corps de base (1), par une face de chargement essentiellement plane (4) et **en ce que** le moteur électrique (16) et la batterie (17) sont disposés en dessous de la face de chargement (4) ou dans une ou plusieurs des roues (2, 3).

3. Petit véhicule selon une des revendications 1 ou 2, **caractérisé en ce que** le dispositif de direction (8, 9) comprend une colonne de direction (8), qui est reliée au corps de base (1) dans le tiers avant de ce dernier.

4. Petit véhicule selon la revendication 3, **caractérisé en ce que** l'inclinaison de la colonne de direction (8) par rapport à la face de chargement (4) peut être modifiée.

5. Petit véhicule selon l'une quelconque des revendications 1 à 4, **caractérisé en ce que** la face de chargement (4) présente des moyens de fixation (10), en particulier des oreilles ou des rails, pour la fixation de marchandises sur la face de chargement.

6. Petit véhicule selon l'une quelconque des revendications 1 à 5, **caractérisé en ce qu'**il est prévu au moins un récipient de transport (20), qui peut être monté sur ou accroché au petit véhicule en un endroit situé à l'extérieur de la face de chargement (4).

7. Petit véhicule selon l'une quelconque des revendications 1 à 6, **caractérisé en ce qu'**il est prévu un arceau essentiellement en forme de U (24), monté de façon rotative.

8. Petit véhicule selon la revendication 7, **caractérisé en ce qu'**il est prévu au moins un autre arceau (25, 26) et un matériau en forme de feuille (27, 28) est fixé entre les deux arceaux (24, 25, 26).

9. Petit véhicule selon l'une quelconque des revendications 1 à 8, **caractérisé en ce que** la batterie (17) peut être glissée sous la face de chargement (4).

10. Petit véhicule selon l'une quelconque des revendications 1 à 9, **caractérisé en ce que** le dispositif de siège (11) présente une banquette (35) orientée transversalement à l'axe longitudinal du véhicule, qui comporte un renflement (36) s'étendant suivant l'axe longitudinal du véhicule.

11. Petit véhicule selon l'une quelconque des revendications 1 à 10, **caractérisé en ce que** le dispositif de siège (11) est réglable en hauteur.

12. Petit véhicule selon l'une quelconque des revendications 1 à 11, **caractérisé en ce qu'**au moins une partie de la face de chargement (4) est constituée par un module solaire.
